Europäisches Patentamt

European Patent Office

Office européen des brevets

(11) Publication number: 0 474 165 A1

# EUROPEAN PATENT APPLICATION

(21) Application number: 91114761.9

(22) Date of filing: 02.09.91

(51) Int. Cl.5: B65G 39/073, B65G 45/20

(30) Priority: 03.09.90 IT 4168090

(43) Date of publication of application:
11.03.92 Bulletin 92/11

(84) Designated Contracting States:
AT BE CH DE DK ES FR GB GR IT LI LU NL SE

(71) Applicant: Faccia, Tiziano
Via Padova 102
I-35026 Conselve (Padova)(IT)

(72) Inventor: Faccia, Tiziano
Via Padova 102
I-35026 Conselve (Padova)(IT)

(74) Representative: Modiano, Guido et al
MODIANO, JOSIF, PISANTY & STAUB
Modiano & Associati Via Meravigli, 16
I-20123 Milano(IT)

(54) Improved transmission roller for conveyor belts.

(57) An improved transmission roller (4) for conveyor belts (3) to be used particularly but not exclusively in the zootechnical field for the conveyance of fodder. The roller includes a shaft (6) which is rotatably connected to the belt supporting structure and around which a spiral scroll (7) extends; the scroll is preferably made of a strip of metallic plate, and the conveyor belt is in contact thereon.

Fig.3

EP 0 474 165 A1

The present invention relates to an improved transmission roller for conveyor belts.

The roller is particularly, but not exclusively, suitable for use for conveyor belts used for the conveyance of fodder for feeding livestock.

The conveyor belts currently used in stock-farming can be provided with substantially two types of transmission roller: a first type is constituted by a simple cylinder and although it is constructively very practical, it has the disadvantage that the part of conveyed product which, during use, falls off the belt clings to the roller, in particular if the product is of the waxy type or is constituted by beet pulp. The roller swells consequently unacceptably increasing the tension of the belt until it breaks.

In order to solve this problem, the second type of roller has been devised, and is in practice constituted by a cage of metallic bars arranged between two disk-like end elements.

In this case, the product which falls from the belt is collected inside the cage, and the roller preserves the original size.

In any case, the product, due to its own characteristics and to the weather conditions, will eventually form a compact block inside the cage which must therefore be periodically cleaned in order to avoid a swelling of the roller.

The aim of the present invention is to provide an improved transmission roller for conveyor belts which is self-cleaning and thus solves the disadvantages described above in the prior art, in particular avoiding excessive tensions of the belt.

A consequent primary object is to provide an improved roller by means of which the cleaning and maintenance operations are considerably reduced.

Not least object is to provide an improved transmission roller which has a simple construction and has a low cost.

This aim, these objects and others which will become apparent hereinafter are achieved by an improved transmission roller for conveyor belts, characterized in that it comprises a shaft which is rotatably connected to the belt supporting structure, a spiral scroll extending around said shaft, said conveyor belt being in contact with said spiral scroll on the outer profile thereof.

Further characteristics and advantages of the invention will become apparent from the detailed description of an embodiment thereof, illustrated only by way of non-limitative example in the accompanying drawings, wherein:

figure 1 is a partial side view of the head of a per se known self-propelled fodder conveyor which is internally provided with a conveyor belt having transmission rollers according to the invention;

figure 2 is a partial sectional view, taken along the plane II-II of figure 1;

figure 3 is a partial sectional view, taken along the plane III-III of figure 1;

figure 4 is a side view of the head of a self-loading fodder conveyor of the extendable type, provided with conveyor belts with transmission rollers according to the invention;

figure 5 is a partial sectional view, taken along the plane V-V of figure 4.

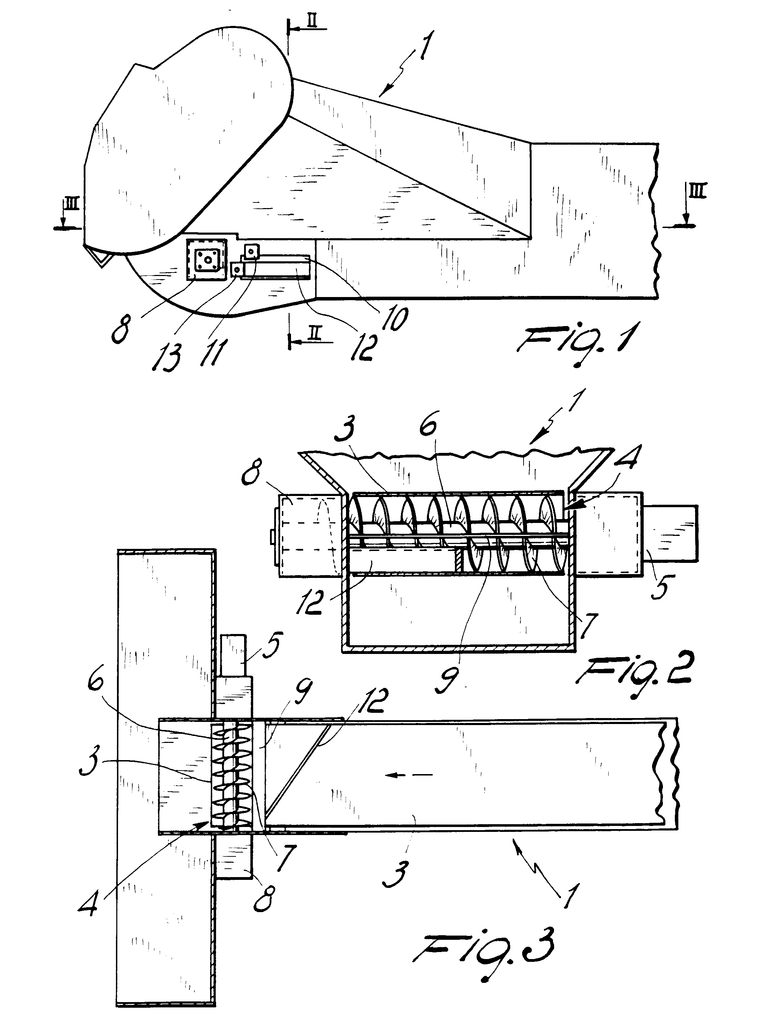

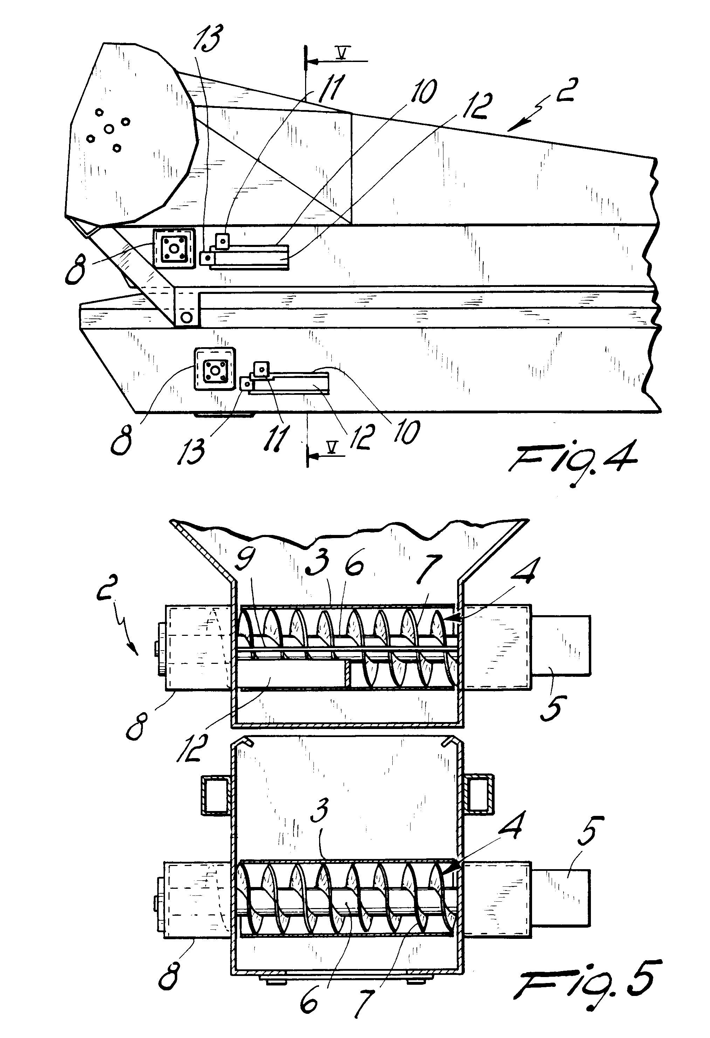

With reference to the above figures, the heads of a self-propelled fodder conveyor and of a self-loading fodder conveyor are respectively indicated by the reference numerals 1 and 2.

Said conveyors, according to the prior art, have a box structure and, inside said structure, conveyor belts 3 for the conveyance of the product removed from the silo and for the loading of shredding-mixing trucks.

Said conveyor belts 3 are conveniently transmitted by means of rollers according to the invention, each generally indicated by the reference numeral 4.

The rollers 4, which are rotatably connected to the box structure of either conveyors 1 or 2, are in this case motorized by means of conventional motors 5, but can also be conveniently free.

Each roller 4, according to the invention, is conveniently constituted by a shaft 6, which is connected to the related motor 5 at one end. A scroll 7, made of a strip of spiral metal plate, extends along the shaft 6.

The corresponding belt 3 tightly winds around the outer profile of said scroll 7.

In order to compensate the lateral force component which is induced on the belt 3 by the presence of the scroll 7 during the rotation thereof, the profile of said scroll can be conveniently provided with a slight taper, widening in the direction of said thrust.

Scroll 7 causes the product, which falls from the belt 3 and gathers around the shaft 6, to be subjected to a translatory motion toward the side opposite to the motor 5, where, outside the structure of either conveyors 1 or 2, a case 8 is fixed thereto and is open inward and downward; said scroll 7 partially extends inside said case.

The product collected by the scroll 7 is thus carried by said scroll toward the inside of the element 8, from which it falls onto the ground.

The extension of said shaft 6 is such as to completely cross said element 8 and is rotatably connected to its lateral wall.

With each transmission roller 4 it is possible to associate a first longitudinal scraper blade 9 which is rigidly associated between the walls of the structure of the mill 1 or 2, grazing the profile of the scroll 7 on the side which is not in contact with the belt 3.

Said first scraper blade 9 has the purpose of keeping said profile of the scroll 7 clean, avoiding increases in its diameter and thus tensions on the belt 3.

An opening 10, on the side panel of the structure, and end fixing plates 11 are provided for the assembly of said blade.

It is also possible to associate with each transmission roller 4 a second scraper blade 12, also arranged at said opening 10, in internal contact with the lower part of the belt 3.

Said second blade 12, which is conveniently provided with plates 13 for fixing to the side panels, is arranged inclined so as to direct the product which has possibly fallen onto the belt 3 during use toward said opening 10 and thus outward, keeping said belt clean.

It has thus been observed in practice that the transmission roller according to the invention has achieved the intended aim and objects, since it is in practice self-cleaning and does not subject the belt to dangerous tensions which frequently lead to breakage.

The transmission roller according to the invention can naturally be applied to any conveyor belt used in the zootechnical field, both for the conveyance of products and for feeding livestock, as well as for other uses.

It is apparent that the roller according to the invention can be also used in any other field wherein a conveyor belt must be used to convey materials which tend, due to their own characteristics, or to weather conditions, to form compact blocks which complicate handling.

The transmission roller according to the invention thus conceived is susceptible to numerous modifications and variations, all of which are within the scope of the inventive concept.

All the details may furthermore be replaced with other technically equivalent elements.

In practice, the materials employed, as well as the dimensions, may be any according to the requirements.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Improved transmission roller for conveyor belts, characterized in that it comprises a shaft (6) rotatably connected to a supporting structure of a conveyor belt (3), a spiral scroll (7) extending around said shaft and having an outer profile, said conveyor belt being in contact with the outer profile of said scroll.

2. Improved roller according to claim 1, characterized in that said scroll has a slightly tapered profile and widens in the direction of the lateral thrust exerted on said belt during rotation by said scroll.

3. Improved roller according to one or more of the preceding claims, characterized in that said scroll ends inside a case element (8) which is arranged laterally to the conveyor belt and is open downward.

4. Improved roller according to one or more of the preceding claims, characterized in that it is associated with a longitudinal first scraper blade (9) which grazes the profile of said scroll on the side opposite to the one in contact with said belt.

5. Improved roller according to one or more of the preceding claims, characterized in that it is associated with an inclined second scraper blade (12) which internally grazes the lower part of said belt.

6. Improved roller according to claim 1, characterized in that said scroll (7) is constituted by a metallic plate.

Fig. 1

Fig. 2

Fig. 3

Fig.4

Fig.5

European
Patent Office

**EUROPEAN SEARCH
REPORT**

Application Number

**EP 91 11 4761**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 717 085  (J. STODDARD & SONS)<br>* page 6, line 6 - page 7, line 14; claims 1, 3; figures 1-6 *<br>– – – | 1 | B 65 G 39/073<br>B 65 G 45/20 |
| X | US-A-2 886 169  (CALDER)<br>* column 2, lines 9 - 36; figures 1-3 *<br>– – – | 1 | |
| X | US-A-4 913 279  (TONISSEN)<br>* the whole document *<br>– – – | 1,6 | |
| A | US-A-2 945 581  (CLENDENIN)<br>* column 2, lines 38 - 43; figures 1, 2, 4 *<br>– – – | 1,4 | |
| A | GB-A-1 556 377  (ORBIS ENGINEERING)<br>* page 3, lines 70 - 76; figures 1-3 *<br>– – – – – | 3 | |

TECHNICAL FIELDS
SEARCHED (Int. Cl.5)

B 65 G

The present search report has been drawn up for all claims

| Place of search | Date of completion of search | Examiner |
|---|---|---|
| Berlin | 12 December 91 | SIMON J J P |

CATEGORY OF CITED DOCUMENTS

X : particularly relevant if taken alone
Y : particularly relevant if combined with another
    document of the same catagory
A : technological background
O : non-written disclosure
P : intermediate document
T : theory or principle underlying the invention

E : earlier patent document, but published on, or after
    the filing date
D : document cited in the application
L : document cited for other reasons
------------------------------------------------------------------------------------
& : member of the same patent family, corresponding
    document